# DEMANDE DE BREVET EUROPEEN

(11) **EP 0 677 944 A1**
(43) Date de publication de la demande: **18.10.1995**
(21) Numéro de dépôt: 95410031.9
(22) Date de dépôt: 11.04.1995
(51) Int. Cl.: H04M 1/03

(54) **Dispositif de maintien d'un transducteur de combiné téléphonique**

(30) Priorité: 14.04.1994 FR 9404758
(71) Demandeur: MONETEL S.A., F-07500 Granges-les-Valence (FR)
(72) Inventeur: Soubirane, Alain, F-26500 Bourg Les Valence (FR)
(74) Mandataire: de Beaumont, Michel

(57) **Abrégé**

La présente invention conoerne un dispositif de maintien d'un transducteur (12) dans une bonnette d'un combiné de poste téléphonique, comprenant un anneau (24) en matière visco-élastique à l'intérieur duquel doit être disposé le transducteur, de diamètre intérieur sensiblement égal au diamètre du transducteur et de diamètre extérieur inférieur au diamètre intérieur de la bonnette (10). Cet anneau comporte un premier épaulement intérieur formant un joint (26) destiné à prendre appui entre la face avant du transducteur et une face de transmission (10-1) de la bonnette ; un deuxième épaulement intérieur (27) venant prendre appui sur la face arrière du transducteur ; et des protubérances (29, 33) venant en contact avec diverses parties de la bonnette et du combiné pour assurer le maintien du dispositif selon toutes les directions.

## Description

La présente invention concerne les combinés de postes téléphoniques, et plus particulièrement le montage d'un transducteur (écouteur ou microphone) dans un combiné, notamment dans un combiné de téléphone public.

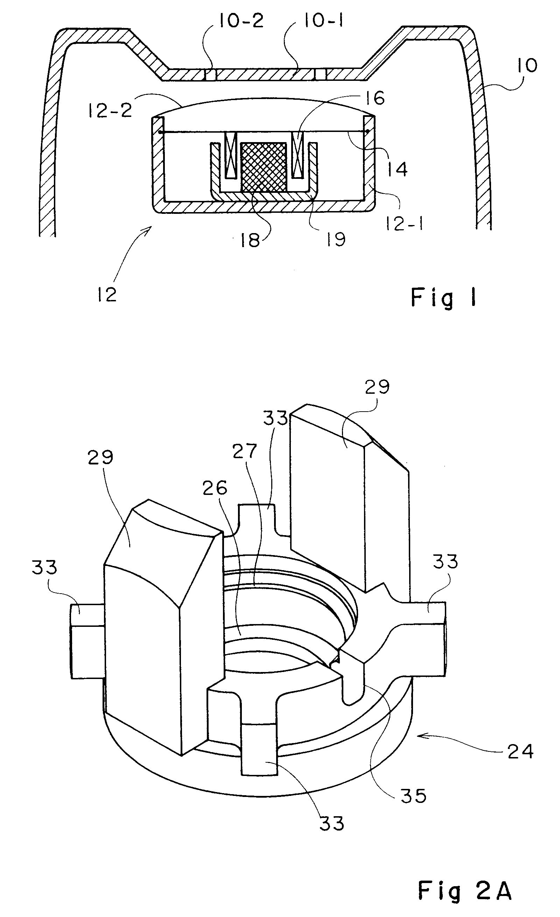

La figure 1 représente partiellement une bonnette 10 de combiné téléphonique, dans laquelle est disposé un transducteur 12 (écouteur ou microphone). Le transducteur 12 est généralement un transducteur électrodynamique comprenant une membrane 14 dont la périphérie est solidaire du boitier 12-1 du transducteur. Au centre de la membrane 14, est fixé un bobinage 16 à axe perpendiculaire à la membrane. Le bobinage 16 plonge dans un entrefer situé entre un aimant permanent central 18 et une carcasse métallique 19 entourant l'aimant. La carcasse métallique 19 est fixée sur le boitier 12-1. Le boîtier 12-1 est fermé, du côté de la membrane 14, par un capot 12-2 perméable au son, comprenant généralement des trous.

La bonnette 10 est de forme générale cylindrique et est fermée par une face 10-1, ci-après face de transmission, par laquelle transite le son de ou vers le transducteur 12. Comme cela est représenté, la face de transmission 10-1 est souvent indentée et comporte des trous 10-2. La face avant du transducteur 12, c'est-à-dire la face du côté de la membrane 14, se trouve à une certaine distance de la face de transmission 10-1. Cette distance doit être comprise entre deux valeurs limites pour répondre à certains critères, tels que des critères d'acoustique, d'immunité aux décharges électrostatiques...

En outre, il faut assurer une étanchéité acoustique et à l'eau entre l'intérieur de la bonnette et la zone comprise entre la face de transmission 10-1 et la face avant du transducteur.

Une solution courante pour monter le transducteur 12 dans la bonnette 10 tout en remplissant les conditions susmentionnées, consiste à placer un joint souple, de diamètre sensiblement égal à celui du transducteur 12, entre la face de transmission 10-1 de la bonnette et la face avant du transducteur. Une pression est ensuite exercée sur ce joint souple en fixant la face arrière du transducteur 12 dans la bonnette par sertissage, bridage ou collage.

Dans les téléphones publics, on a remarqué que les transducteurs se détérioraient souvent, notamment le bobinage 16 se décollait de la membrane et/ou l'aimant se décollait de sa carcasse. Ceci est dû aux chocs violents et répétés que subit le combiné dans un téléphone public. Ces chocs peuvent être provoqués par des actes de vandalisme ou le simple fait de raccrocher le combiné. Le transducteur le plus exposé aux chocs est celui de l'écouteur car l'utilisateur tient généralement le combiné par la bonnette qui contient le microphone.

Le montage susmentionné à joint souple assure un certain amortissement des chocs frontaux, c'est-à-dire sur la face de transmission 10-1 de la bonnette, mais cet amortissement est insuffisant pour assurer une longévité acceptable du transducteur. Les chocs latéraux et dorsaux ne sont pas amortis car le transducteur est généralement rigidement fixé latéralement et à l'arrière.

Certains fabricants montent le transducteur dans une coquille en caoutchouc qui assure un léger amortissement frontal et latéral. L'amortissement dorsal est inexistant et le montage du transducteur est complexe.

La présente invention prévoit un dispositif de montage de transducteur dans une bonnette particulièrement simple et assurant un amortissement particulièrement efficace dans toutes les directions.

Pour atteindre cet objet, la présente invention prévoit un dispositif de maintien d'un transducteur dans une bonnette d'un combiné de poste téléphonique, comprenant un anneau en matière visco-élastique à l'intérieur duquel doit être disposé le transducteur, de diamètre intérieur sensiblement égal au diamètre du transducteur et de diamètre extérieur inférieur au diamètre intérieur de la bonnette. Cet anneau comporte un premier épaulement intérieur formant un joint destiné à prendre appui entre la face avant du transducteur et une face de transmission de la bonnette ; un deuxième épaulement intérieur venant prendre appui sur la face arrière du transducteur ; et des protubérances venant en contact avec diverses parties de la bonnette et du combiné pour assurer le maintien du dispositif selon toutes les directions.

Selon un mode de réalisation de la présente invention, les protubérances comprennent au moins trois masselottes régulièrement espacées sur le diamètre extérieur de l'anneau, destinées à prendre appui sur le diamètre intérieur de la bonnette, et deux montants diamétralement opposés, s'étendant axialement vers l'arrière depuis l'anneau et destinés à prendre appui contre le fond du combiné.

Selon un mode de réalisation de la présente invention, les masselottes s'étendent partiellement sur la hauteur de l'anneau et se trouvent au niveau du deuxième épaulement.

Selon un mode de réalisation de la présente invention, le dispositif comprend une rainure diamétrale séparant le deuxième épaulement en deux demi-épaulements.

Selon un mode de réalisation de la présente invention, les montants vont en se rétrécissant vers l'arrière.

Ces objets, caractéristiques et avantages ainsi que d'autres de la présente invention seront exposés plus en détail dans la description suivante de modes de réalisation particuliers faite à titre non-limitatif à l'aide des figures jointes parmi lesquelles :
la figure 1, précédemment décrite, représente partiellement une bonnette de combiné téléphonique contenant un transducteur d'écouteur ou de microphone ; et
les figures 2A à 2C représentent respectivement une vue en perspective, une vue latérale en demi-coupe, et une vue de dos d'un mode de réalisation de dispositif de maintien de transducteur selon l'invention.

La présente invention propose de réaliser un dispositif de maintien d'une seule pièce en un matériau visco-élastique. Le dispositif de maintien a une configuration telle que le transducteur se monte par simple insertion dans le dispositif et que le dispositif se monte avec son transducteur par simple insertion dans un combiné téléphonique. Une fois que le dispositif se trouve dans le combiné, le transducteur est maintenu selon toutes les directions dans le dispositif qui est lui-même maintenu selon toutes les directions dans le combiné. Il est prévu suffisamment de matière entre chaque point du transducteur et les parois intérieures de la bonnette et du combiné téléphonique pour assurer un amortissement efficace dans toutes les directions, cet amortissement étant particulièrement favorisé par le matériau visco-élastique. Un matériau visco-élastique que l'on peut utiliser est, par exemple, celui fabriqué sous la marque Catane QS par la société CATY.

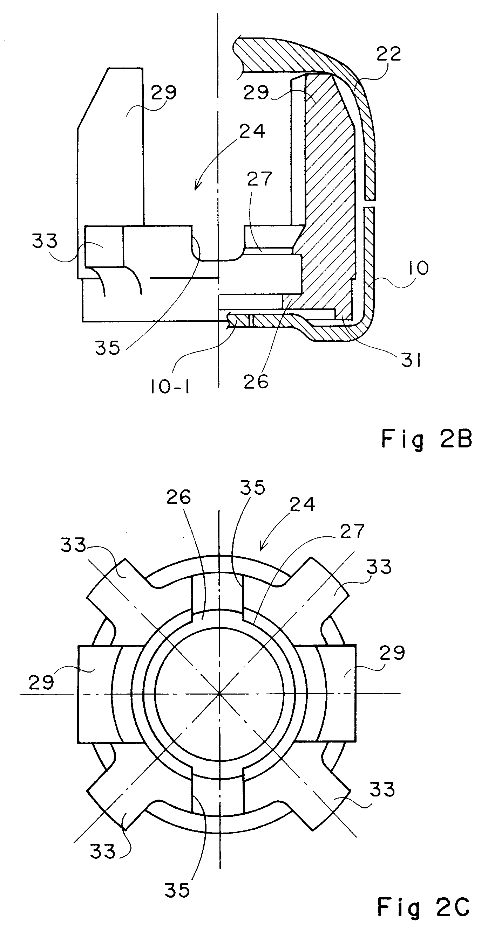

Les figures 2A à 2C, qui seront décrites simultanément, représentent respectivement une vue en perspective, une vue en demi-coupe latérale et une vue de dos d'un mode de réalisation de dispositif de maintien selon l'invention.

La figure 2B représente un dispositif de maintien monté dans un combiné téléphonique 22 comprenant une bonnette 10 fixée sur le combiné par des moyens classiques, par exemple par vissage ou enclenchement.

Le dispositif de maintien comporte une partie principale 24, de forme générale annulaire, ci-après dénomée anneau. Le transducteur se monte à l'intérieur de l'anneau 24. Le diamètre intérieur de l'anneau est sensiblement égal au diamètre du transducteur, ce qui assure le maintien latéral du transducteur.

La face avant du transducteur vient en appui sur un épaulement radial intérieur 26 de l'anneau. Du côté opposé à la face avant du transducteur, l'épaulement 26 vient en appui sur la face de transmission 10-1 de la bonnette 10. Ainsi, l'épaulement 26 sert de joint d'étanchéité et à assurer la distance requise entre la face avant du transducteur et la face de transmission 10-1 de la bonnette. L'épaulement 26 assure l'amortissement des chocs frontaux sur le combiné.

L'anneau 24 comporte un deuxième épaulement radial intérieur 27 destiné à venir en appui sur la face arrière du transducteur. La distance séparant les épaulements 26 et 27 est sensiblement égale, de préférence légèrement inférieure, à la hauteur du transducteur. Ainsi, les épaulements 26 et 27 maintiennent le transducteur axialement.

Deux montants diamétralement opposés 29 s'étendent axialement vers l'arrière depuis l'anneau 24 et prennent appui contre le fond du combiné 22. Le dispositif de maintien est ainsi maintenu axialement entre le fond du combiné 22 par les montants 29 et la face de transmission 10-1 de la bonnette par l'épaulement 26. Si la face active 10-1 de la bonnette est indentée, comme cela est représenté à la figure 2B, l'anneau 24 comporte, de préférence, un épaulement axial périphérique 31 permettant d'assurer un appui uniforme du dispositif de maintien sur la face de transmission 10-1. Les montants 29 assurent l'amortissement des chocs dorsaux sur le combiné. Pour améliorer l'efficacité d'amortissement, les montants 29 peuvent être réalisés de manière qu'ils se rétrécissent en allant vers l'arrière, comme cela est représenté.

Le diamètre extérieur de l'anneau 24 est inférieur au diamètre intérieur de la bonnette 10. La périphérie de l'anneau 24 comporte au moins trois masselottes 33 (quatre sont représentées) régulièrement réparties. Ces masselottes 33 prennent appui sur le diamètre intérieur de la bonnette 10 pour assurer le maintien latéral du dispositif de maintien et amortir les chocs latéraux sur le combiné. Bien entendu, le diamètre extérieur de l'anneau 24 aurait pu être égal au diamètre intérieur de la bonnette 10, mais ceci augmenterait la rigidité latérale du dispositif et diminuerait l'efficacité de l'amortissement. De préférence, comme cela est représenté, les masselottes 33 ne s'étendent pas sur toute la hauteur de l'anneau 24, mais sont situées au niveau de l'épaulement 27. Ceci permet d'augmenter l'efficacité du maintien du transducteur par l'épaulement 27, et donc de diminuer le risque d'échappement du transducteur lors de chocs dorsaux sur le combiné.

Le transducteur est monté dans le dispositif de maintien avant d'insérer l'ensemble dans la bonnette et le combiné téléphonique. Pour faciliter le montage, la partie postérieure de l'anneau 24 comporte, entre les montants 29, une rainure diamétrale 35 séparant l'épaulement 27 en deux demi-épaulements. En outre, la face postérieure de l'épaulement 27 est inclinée. Ainsi, pour monter le transducteur, il suffit d'écarter les montants 29 l'un de l'autre, ce qui écarte les deux demi-épaulements 27, et d'insérer sans effort le transducteur à l'intérieur de l'anneau. L'ensemble du dispositif et du transducteur est inséré dans la bonnette qui est ensuite montée sur le combiné où il n'est plus possible d'écarter les deux demi-épaulements 27.

De nombreuses variantes et modifications de la présente invention apparaîtront à l'homme du métier. Par exemple, pour améliorer le maintien dorsal du transducteur, on peut munir les demi-épaulements 27 d'oreilles.

## Revendications

1. Dispositif de maintien d'un transducteur (12) dans une bonnette d'un combiné de poste téléphonique, comprenant un anneau (24) à l'intérieur duquel doit être disposé le transducteur, de diamètre intérieur sensiblement égal au diamètre du transducteur et de diamètre extérieur inférieur au diamètre intérieur de la bonnette (10), cet anneau comportant :
- un premier épaulement intérieur formant un joint (26) destiné à prendre appui entre la face avant du transducteur et une face de transmission (10-1) de la bonnette ;
- un deuxième épaulement intérieur (27) venant prendre appui sur la face arrière du transducteur ;
caractérisé en ce que le dispositif est en matière visco-élastique et en ce que l'anneau comporte des protubérances massives (29, 33) s'étendant jusqu'aux parois internes de la bonnette et du combiné pour assurer le maintien du dispositif et un amortissement selon toutes les directions.

2. Dispositif de maintien selon la revendication 2, caractérisé en ce que les protubérances comprennent :
- au moins trois masselottes (33) régulièrement espacées sur le diamètre extérieur de l'anneau (24), destinées à prendre appui sur le diamètre intérieur de la bonnette (10) ; et
- deux montants (29) diamétralement opposés, s'étendant axialement vers l'arrière depuis l'anneau (24) et destinés à prendre appui contre le fond du combiné (22).

3. Dispositif selon la revendication 2, caractérisé en ce que les masselottes (33) s'étendent partiellement sur la hauteur de l'anneau (24) et se trouvent au niveau du deuxième épaulement (27).

4. Dispositif selon la revendication 1, caractérisé en ce qu'il comprend une rainure diamétrale (35) séparant le deuxième épaulement (27) en deux demi-épaulements.

5. Dispositif de maintien selon la revendication 1, caractérisé en ce que les montants (29) vont en se rétrécissant vers l'arrière.
